# EUROPEAN PATENT APPLICATION

(11) **EP 2 492 313 A2**
(43) Date of publication of application: **29.08.2012**
(21) Application number: 10825203.2
(22) Date of filing: 21.10.2010
(51) Int. Cl.: C08L 67/03, G02B 1/04

(54) **WHOLLY AROMATIC LIQUID CRYSTAL POLYESTER RESIN COMPOUND, PREPARATION METHOD THEREOF, PARTS FOR OPTICAL PICKUP, AND PREPARATION METHOD THEREOF**

(30) Priority: 21.10.2009 KR 20090100305
(71) Applicant: Samsung Fine Chemicals Co., Ltd., Ulsan-city 680-090 (KR)
(72) Inventor: YUN, Jong Hwa, Daejeon-city 305-728 (KR); KIM, Hyun Min, Daejeon-city 305-752 (KR); KIM, Mahn Jong, Daejeon-city 305-728 (KR)
(74) Representative: von Kreisler Selting Werner
(86) International application number: PCT/KR2010/007215
(87) International publication number: WO 2011/049378

(57) **Abstract**

Disclosed are a wholly aromatic liquid crystal polyester resin compound, a preparation method thereof, parts for optical pickup, and a preparation method thereof. The disclosed wholly aromatic liquid crystal polyester resin compound comprises two kinds of wholly aromatic liquid crystal polyester resins having different melting points and an additive, and most of the terminal groups in the resins having lower melting points among the resins comprise a carboxyl group.

## Description

### Technical Field

The present invention relates to a wholly aromatic liquid crystalline polyester resin compound, a method of preparing the resin compound, parts for optical pick-up, and a method of preparing the parts, and more particularly, to a wholly aromatic liquid crystalline polyester resin compound including two kinds of wholly aromatic liquid crystalline polyester resins having different melting points and an additive, wherein most of the end groups in the resin having a lower melting point among the resins include a carboxyl group, a method of preparing the resin compound, parts for optical pick-up including the wholly aromatic liquid crystalline polyester resin compound, and a method of preparing the parts.

### Background Art

Wholly aromatic liquid crystalline polyester resins have high heat resistance, excellent dimensional stability, and excellent fluidity when being melted, and thus, are widely used around the world, mainly in the electronic parts industry, as materials for injection molding. Particularly, due to excellent dimensional stability and electricity insulation performance, their usage has been expanding into films for electronic materials and materials for substrates.

Among wholly aromatic liquid crystalline polyester resins, a resin having a heat distortion temperature under load of 250°C is widely used to prepare parts for optical pick-up that require high heat resistance. In addition, rigidity or linearity of a molecular structure of the wholly aromatic liquid crystalline polyester resin may vary according to the composition of monomers used to synthesize the resin. Thus, the composition of the monomers may be adjusted to prepare a highly heat resistant wholly aromatic liquid crystalline polyester resin having a melting point of 400°C or greater and a heat distortion temperature under load of 320°C or greater.

However, the highly heat resistant wholly aromatic liquid crystalline polyester resin cannot be efficiently processed due to a high melting point.

Highly heat resistant wholly aromatic liquid crystalline polyester resins used as materials of parts for an optical pick-up require high processibility, particularly, high fluidity, to produce a compact and lightweight product and should generate a very low amount of outgas during a high-temperature process.

Used herein, the term 'outgas' refers to gas generated from a wholly aromatic liquid crystalline polyester resin and a resin compound including the same during a high-temperature process of the resin and/or the resin compound.

### Detailed Description of the Invention

### Technical Problem

The present invention provides a wholly aromatic liquid crystalline polyester resin compound including two kinds of wholly aromatic liquid crystalline polyester resins having different melting points and an additive, wherein most of the end groups in the resin having a lower melting point among the resins include a carboxyl group.

The present invention also provides a method of preparing the wholly aromatic liquid crystalline polyester resin compound.

The present invention also provides parts for optical pick-up including the wholly aromatic liquid crystalline polyester resin compound.

The present invention also provides a method of preparing the parts for optical pick-up including the wholly aromatic liquid crystalline polyester resin compound.

### Technical Solution

According to an aspect of the present invention, there is provided a wholly aromatic liquid crystalline polyester resin compound including: a first wholly aromatic liquid crystalline polyester resin having a higher melting point Tₘ₁; a second wholly aromatic liquid crystalline polyester resin having a lower melting point Tm₂; and an additive,
wherein the higher melting point Tₘ₁ of the first wholly aromatic liquid crystalline polyester resin and the lower melting point Tₘ₂ of the second wholly aromatic liquid crystalline polyester resin satisfy the following condition:
370°C≤Tₘ₁≤440°C,
310°C≤Tₘ₂≤380°C, and
20°C≤Tₘ₁-Tₘ₂≤80°C.

The first wholly aromatic liquid crystalline polyester resin may include: 40 to 60 mol% of a repeating unit A derived from an aromatic hydroxycarboxylic acid; 10 to 30 mol% of a repeating unit B derived from an aromatic diol; and 10 to 25 mol% of a repeating unit C derived from an aromatic dicarboxylic acid with respect to the total repeating units.

The second wholly aromatic liquid crystalline polyester resin may include a repeating unit A derived from an aromatic hydroxycarboxylic acid, a repeating unit B derived from an aromatic diol, and a repeating unit C derived from an aromatic dicarboxylic acid, wherein the repeating units A, B, and C may satisfy the following condition:
40 mol% ≤ repeating unit A/total repeating units ≤ 60 mol%,
10 mol% ≤ repeating unit B/total repeating units ≤ 30 mol%,
80 mol% ≤ repeating unit B/repeating unit C ≤ 100 mol%.

The repeating unit A may be derived from at least one compound selected from the group consisting of p-hydroxy benzoic acid and 2-hydroxy-6-naphthoic acid, the repeating unit B may be derived from at least one compound selected from the group consisting of biphenol and hydroquinone, and the repeating unit C may be derived from at least one compound selected from the group consisting of isophthalic acid, naphthalene dicarboxylic acid, and terephthalic acid.

The repeating unit C of the second wholly aromatic liquid crystalline polyester resin may satisfy the following condition:
15 mol% ≤ repeating unit C₂ derived from isophthalic acid/(repeating unit C₁ derived from terephthalic acid+repeating unit C₂ derived from isophthalic acid) ≤ 35 mol%.

The repeating unit C of the first wholly aromatic liquid crystalline polyester resin may include 10 to 25 mol% of a repeating unit C₁ derived from terephthalic acid and 0 to 5 mol % of a repeating unit C₂ derived from isophthalic acid with respect to the total repeating units.

The amount of the second wholly aromatic liquid crystalline polyester resin may be in the range of 5 to 40 parts by weight based on 100 parts by weight of the first wholly aromatic liquid crystalline polyester resin.

The additive may include at least one of an inorganic additive and an organic additive.

The inorganic additive may include glass fiber, talc, calcium carbonate, mica, clay, or any mixture of at least two thereof, and the organic additive may include carbon fiber.

The amount of the additive may be in the range of 10 to 100 parts by weight based on 100 parts by weight of the total amount of the first wholly aromatic liquid crystalline polyester resin and the second wholly aromatic liquid crystalline polyester resin.

According to another aspect of the present invention, there is provided parts for optical pick-up including the wholly aromatic liquid crystalline polyester resin compound.

According to another aspect of the present invention, there is provided a method of preparing parts for optical pick-up including molding the wholly aromatic liquid crystalline polyester resin compound at a temperature higher than the Tₘ₁ by 10 to 40°C.

According to another aspect of the present invention, there is provided a method of preparing a wholly aromatic liquid crystalline polyester resin compound, the method comprising: mixing 100 parts by weight of a first wholly aromatic liquid crystalline polyester resin having a higher melting point Tₘ₁, 5 to 40 parts by weight of a second wholly aromatic liquid crystalline polyester resin having a lower melting point T_{m2,} and 10 to 100 parts by weight of an additive based on 100 parts by weight of the total amount of the first wholly aromatic liquid crystalline polyester resin and the second wholly aromatic liquid crystalline polyester resin, and melt-kneading the mixture; and
wherein the higher melting point Tₘ₁ of the first wholly aromatic liquid crystalline polyester resin and the lower melting point Tₘ₂ of the second wholly aromatic liquid crystalline polyester resin satisfy the following condition:
370°C ≤ Tₘ₁ ≤ 440°C,
310°C ≤ Tₘ₂ ≤ 380°C, and
20°C ≤ Tₘ₁-Tₘ₂ ≤ 80°C.

### Advantageous Effects

According to an embodiment of the present invention, there are provided a wholly aromatic liquid crystalline polyester resin compound according to an embodiment of the present invention includes two kinds of wholly aromatic liquid crystalline polyester resins having different melting points and an additive, wherein most of the end groups in the resin having a lower melting point among the resins include a carboxyl group, so that the wholly aromatic liquid crystalline polyester resin compound has excellent fluidity and the generation of outgas is inhibited therein during a high-temperature process, a method of preparing the resin compound, parts for optical pick-up including the wholly aromatic liquid crystalline polyester resin compound, and a method of preparing the parts.

### Best mode for carrying out the Invention

Hereinafter, a wholly aromatic liquid crystalline polyester resin compound, a method of preparing the resin compound, parts for optical pick-up, and a method of preparing the parts, according to embodiments of the present invention, will be described in detail. As used herein, the term "and/or" includes any and all combinations of one or more of the associated listed items. Expressions such as "at least one of," when preceding a list of elements, modify the entire list of elements and do not modify the individual elements of the list.

The wholly aromatic liquid crystalline polyester resin compound according to an embodiment of the present invention includes a first wholly aromatic liquid crystalline polyester resin having a higher melting point Tₘ₁, a second wholly aromatic liquid crystalline polyester resin having a lower melting point Tₘ₂, and an additive, wherein the higher melting point Tₘ₁ of the first wholly aromatic liquid crystalline polyester resin and the lower melting point Tₘ₂ of the second wholly aromatic liquid crystalline polyester resin satisfy the following condition:
370°C ≤ Tₘ₁ ≤ 440°C,
310°C ≤ Tₘ₂ ≤ 380°C, and
20°C ≤ Tₘ₁-Tₘ₂ ≤ 80°C.

If the Tₘ₁ is 370°C or greater, heat resistance of the wholly aromatic liquid crystalline polyester resin compound may not deteriorate. On the other hand, if the Tₘ₁ is 440°C or less, fluidity of the wholly aromatic liquid crystalline polyester resin compound may not deteriorate, so that an injection molding efficiency of the wholly aromatic liquid crystalline polyester resin compound may be increased. In addition, if the Tₘ₂ is 310°C or greater, heat resistance of the wholly aromatic liquid crystalline polyester resin compound may not deteriorate and blistering does not occur in the resin compound. On the other hand, if the Tₘ₂ is 380°C or less, fluidity of the wholly aromatic liquid crystalline polyester resin compound significantly increases. If the Tₘ₁-Tₘ₂ is 20°C or greater, fluidity of the wholly aromatic liquid crystalline polyester resin compound considerably increases. On the other hand, if the Tₘ₁-Tₘ₂ is 80°C or less, the second wholly aromatic liquid crystalline polyester resin is not thermally decomposed.

The first wholly aromatic liquid crystalline polyester resin may include: 40 to 60 mol% of a repeating unit A derived from an aromatic hydroxycarboxylic acid; 10 to 30 mol% of a repeating unit B derived from an aromatic diol; and 10 to 25 mol% of a repeating unit C derived from an aromatic dicarboxylic acid with respect to the total repeating units. If the amounts of the repeating unit A, the repeating unit B, and the repeating unit C are within the ranges described above, heat resistance and fluidity of the first wholly aromatic liquid crystalline polyester resin may not deteriorate, so the injection molding efficiency thereof may be improved.

In addition, the repeating unit C of the first wholly aromatic liquid crystalline polyester resin may include 10 to 25 mol% of a repeating unit C₁ derived from terephthalic acid and 0 to 5 mol % of a repeating unit C₂ derived from isophthalic acid with respect to the total repeating units.

The repeating unit A may be derived from at least one compound selected from the group consisting of p-hydroxy benzoic acid and 2-hydroxy-6-naphthoic acid, the repeating unit B may be derived from at least one compound selected from the group consisting of biphenol and hydroquinone, and the repeating unit C may be derived from at least one compound selected from the group consisting of isophthalic acid, naphthalene dicarboxylic acid, and terephthalic acid.

The end group in the second wholly aromatic liquid crystalline polyester resin consists mostly of a carboxyl group. Thus, reactions do not further occur even during a high-temperature process, so that outgas generation may be inhibited.

In addition, the second wholly aromatic liquid crystalline polyester resin includes a repeating unit A derived from an aromatic hydroxycarboxylic acid, a repeating unit B derived from an aromatic diol, and a repeating unit C derived from an aromatic dicarboxylic acid, wherein the repeating units A, B, and C may satisfy the following condition:
40 mol% ≤ repeating unit A/total repeating units ≤ 60 mol%,
10 mol% ≤ repeating unit B/total repeating units ≤ 30 mol%,
80 mol% ≤ repeating unit B/repeating unit C ≤ 100 mol%,

If the amount of the repeating unit A is 40 mol% or greater with respect to the total repeating units, the second wholly aromatic liquid crystalline polyester resin may have an excellent liquid crystalline property. On the other hand, if the amount of the repeating unit A is 60 mol% or less with respect to the total repeating units, an over increase in the melting point of the second wholly aromatic liquid crystalline polyester resin and an increase in stiffness of molecular chains thereof may be prevented. In addition, if the amount of the repeating unit B is in the range of 10 mol% to 30 mol% with respect to the total repeating units, the molecular weight of the second wholly aromatic liquid crystalline polyester resin may be high enough.

In addition, if the repeating unit B/repeating unit C is 80 mol% or greater, the molecular weight of the second wholly aromatic liquid crystalline polyester resin may be high enough. On the other hand, if the repeating unit B/repeating unit C is 100 mol% or less, the second wholly aromatic liquid crystalline polyester resin includes only carboxyl groups as its end groups, so that further reaction does not occur between end groups thereof during a high-temperature process, so that the outgas generation is reduced.

In addition, the repeating unit C of the second wholly aromatic liquid crystalline polyester resin may include a repeating unit C₁ derived from terephthalic acid and a repeating unit C₂ derived from isophthalic acid in the following ratio:
15 mol% ≤ repeating unit C₂ derived from isophthalic acid/(repeating unit C₁ derived from terephthalic acid+repeating unit C₂ derived from isophthalic acid) ≤ 35 mol%.

If the repeating unit C₂/(the repeating unit C₁+the repeating unit C₂) is 15 mol% or greater, the molecular chains of the second wholly aromatic liquid crystalline polyester resin may have excellent flexibility. On the other hand, if the repeating unit C₂/(the repeating unit C₁+the repeating unit C₂) is 35 mol% or less, the second wholly aromatic liquid crystalline polyester resin may have a suitable melting point.

The amount of the second wholly aromatic liquid crystalline polyester resin may be in the range of 5 to 40 parts by weight based on 100 parts by weight of the first wholly aromatic liquid crystalline polyester resin. If the amount of the second wholly aromatic liquid crystalline polyester resin is greater than or equal to 5 parts by weight based on 100 parts by weight of the first wholly aromatic liquid crystalline polyester resin, fluidity of the wholly aromatic liquid crystalline polyester resin compound considerably increases. On the other hand, if the amount of the second wholly aromatic liquid crystalline polyester resin is less than or equal to 40 parts by weight based on 100 parts by weight of the first wholly aromatic liquid crystalline polyester resin, heat resistance of the wholly aromatic liquid crystalline polyester resin compound may not deteriorate.

The first wholly aromatic liquid crystalline polyester resin having a higher melting point and the second wholly aromatic liquid crystalline polyester resin having a lower melting point used in the preparation of the wholly aromatic liquid crystalline polyester resin compound may respectively be prepared according to the following steps:
(a) synthesizing a wholly aromatic liquid crystalline polyester prepolymer by condensation-polymerizing at least two kinds of monomers; and
(b) synthesizing a wholly aromatic liquid crystalline polyester resin by solid phase condensation-polymerizing the prepolymer.

The monomers used in step (a) may further include aromatic hydroxycarboxylic acid, aromatic diol, and aromatic dicarboxylic acid as described above.

The synthesis of step (a) may be performed using solution condensation polymerization or bulk condensation polymerization. In addition, a monomer having reactivity enhanced (i.e., acylated monomer) by pre-treatment with chemicals such as an acylating agent (particularly, acetylating agent such as acetic anhydride) may be used in step (a) in order to expedite the condensation polymerization.

In addition, a metal acetate may further be used as a catalyst facilitating the synthesis of the wholly aromatic liquid crystalline polyester prepolymer in step (a). The metal acetate may include at least one selected from the group consisting of magnesium acetate, potassium acetate, calcium acetate, zinc acetate, manganese acetate, lead acetate, antimony acetate, and cobalt acetate. The amount of the metal acetate may be in the range of 0.001 to 0.10 parts by weight based on 100 parts by weight of the monomers.

To perform the solid phase condensation-polymerization in step (b), the prepolymer is required to be heated using, for example, a heating plate, hot air, hot fluid, or the like.

By-products produced during the solid phase condensation polymerization may be removed by purging with inert gas or by applying vacuum thereto. The repeating units respectively contained in the first wholly aromatic liquid crystalline polyester resin and the second wholly aromatic liquid crystalline polyester resin may be represented by one of the following formulae:
(1) Repeating unit A derived from aromatic hydroxycarboxylic acid: 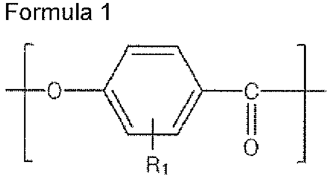 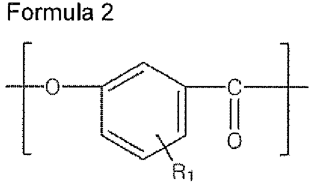 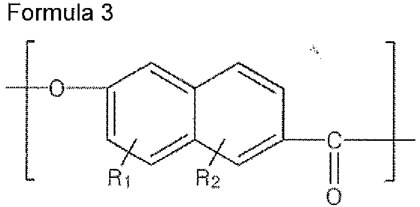 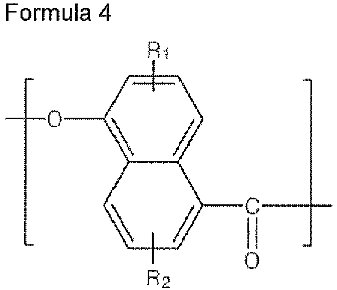 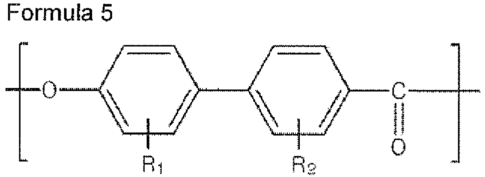
(2) Repeating unit B derived from aromatic diol: 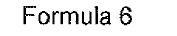 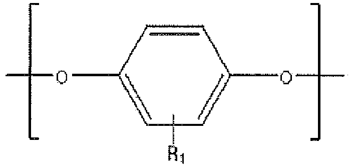 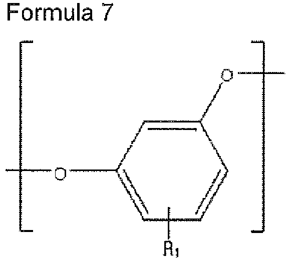 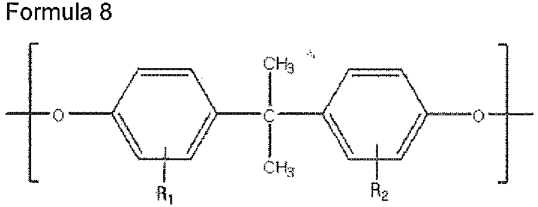 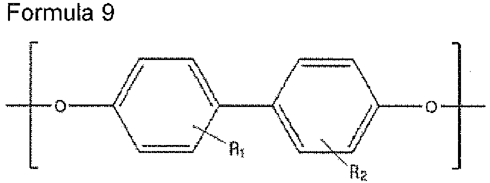
(3) Repeating unit C derived from aromatic dicarboxylic acid:

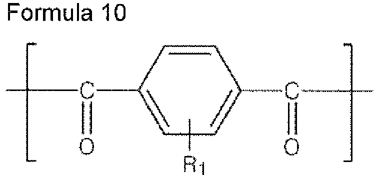

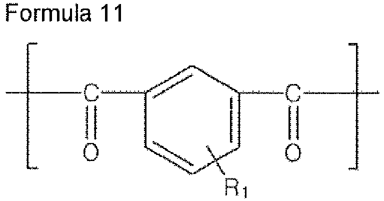

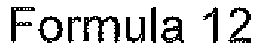

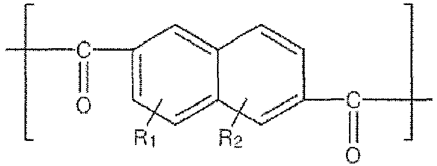

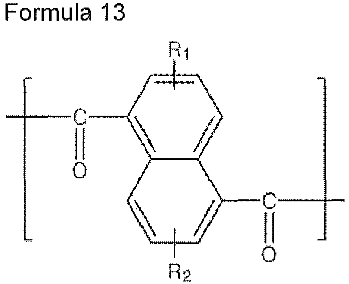

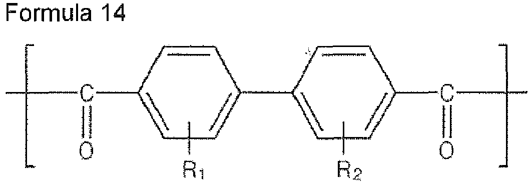

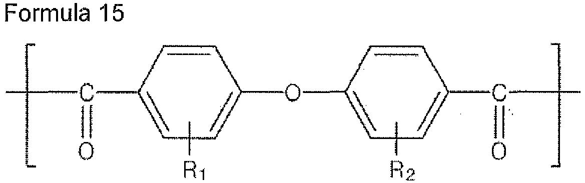

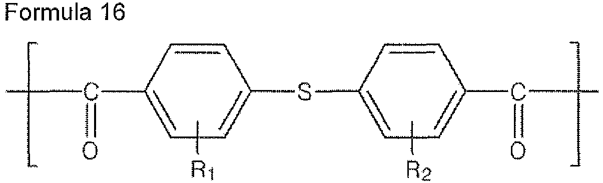

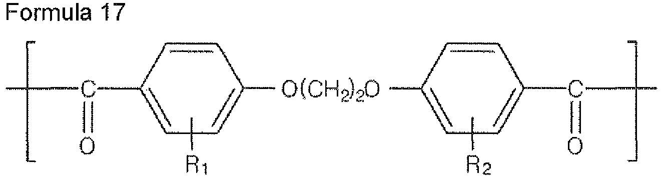

In Formulae 1 to 17, R₁ and R₂ are each independently a halogen atom, a carboxyl group, an amino group, a nitro group, a cyano group, a substituted or unsubstituted C₁-C₂₀ alkyl group, a substituted or unsubstituted C₁-C₂₀ alkoxy group, a substituted or unsubstituted C₂-C₂₀ alkenyl group, a substituted or unsubstituted C₂-C₂₀ alkynyl group, a substituted or unsubstituted C₁-C₂₀ heteroalkyl group, a substituted or unsubstituted C₆-C₃₀ aryl group, a substituted or unsubstituted C₇-C₃₀ arylalkyl group, a substituted or unsubstituted C₅-C₃₀ heteroaryl group, or a substituted or unsubstituted C₃-C₃₀ heteroarylalkyl group.

The term 'substituted' used herein indicates that at least one hydrogen atom of a compound is substituted with a halogen atom, a hydroxy group, an alkyl group, an alkoxy group, an amine group, or a combination thereof.

The additive may include an inorganic additive and/or an organic additive. The inorganic additive may include glass fiber, talc, calcium carbonate, mica, clay, or any mixture of at least two thereof, and the organic additive may include carbon fiber. The inorganic and organic additives improve mechanical strength of an injection-molded product during an injection molding process.

In addition, the amount of the additive may be in the range of 10 to 100 parts by weight based on 100 parts by weight of the total amount of the first wholly aromatic liquid crystalline polyester resin and the second wholly aromatic liquid crystalline polyester resin. If the amount of the additive is greater than or equal to 10 parts by weight based on 100 parts by weight of the total amount of the first wholly aromatic liquid crystalline polyester resin and the second wholly aromatic liquid crystalline polyester resin, the additive shows sufficient effect. On the other hand, if the amount of the additive is less than or equal to 100 parts by weight based on 100 parts by weight of the total amount of the first wholly aromatic liquid crystalline polyester resin and the second wholly aromatic liquid crystalline polyester resin, excellent molding property and high strength of the wholly aromatic liquid crystalline polyester resin compound may be obtained.

Parts for optical pick-up according to an embodiment of the present invention include the wholly aromatic liquid crystalline polyester resin compound.

Used herein, the expression 'parts for optical pick-up' refers to parts that read information and convert the information to electrical signals when discs such as a compact disc (CD) and a mini disc (MD) are reproduced, or a software is recorded or reproduced on or by a recording device.

A method of preparing parts for optical pick-up, according to an embodiment of the present invention, includes molding the wholly aromatic liquid crystalline polyester resin compound at a temperature higher than the Tm₁ by 10 to 40°C. If the molding temperature is less than Tₘ₁+10°C, fluidity of the resin compound may deteriorate. On the other hand, if the molding temperature is greater than Tₘ₁+40°C, the outgas generation increases, and physical properties of the resin compound and the parts for optical pick-up deteriorate.

The wholly aromatic liquid crystalline polyester resin compound may be prepared by mixing 100 parts by weight of the first wholly aromatic liquid crystalline polyester resin having a higher melting point Tₘ₁, 5 to 40 parts by weight of the second wholly aromatic liquid crystalline polyester resin having a lower melting point Tₘ₂, and 10 to 100 parts by weight of the additive based on 100 parts by weight of the total amount of the first wholly aromatic liquid crystalline polyester resin and the second wholly aromatic liquid crystalline polyester resin, and melt-kneading the mixture. The higher melting point Tₘ₁ of the first wholly aromatic liquid crystalline polyester resin and the lower melting point Tₘ₂ of the second wholly aromatic liquid crystalline polyester resin satisfy the following condition:
370°C ≤ Tₘ₁ ≤ 440°C,
310°C ≤ Tₘ₂ ≤ 380°C, and
20°C ≤ Tₘ₁-Tₘ₂ ≤ 80°C.

In addition, the second wholly aromatic liquid crystalline polyester resin may be synthesized by using monomers including aromatic hydroxycarboxylic acid, aromatic diol, and an excess of aromatic dicarboxylic acid.

In the melt-kneading, a batch kneader, a twin-screw extruder, or a mixing roll may be used. A lubricant may also be used during the melt-kneading to increase processibility.

Hereinafter, one or more embodiments will be described in detail with reference to the following examples. However, these examples are not intended to limit the purpose and scope of the invention.

### Examples

### Preparation Example 1: Preparation of Wholly Aromatic Liquid Crystalline Polyester Resin LCP A Having Higher Melting Point

20.72 kg (150 mol) of p-hydroxybenzoic acid, 13.97 kg (75 mol) of biphenol, and 12.46 kg (75 mol) of terephthalic acid were added to a 100 L batch reactor, the temperature of which is controllable. Nitrogen gas was injected to the reactor to inactivate the inside of the reactor, and then 31.60 kg of acetic anhydride was added thereto. Then, 4.00 g of potassium acetate was further added to the reactor in order to facilitate condensation-polymerization that is described below. Then, the temperature of the reactor was increased up to 150°C for 30 minutes and the alcohol functional group of the monomers was acetylated at the same temperature for 2 hours. Then, the temperature of the reactor was increased up to 320°C at 1°C/min while removing acetic acid that is produced during the acetylation to prepare a wholly aromatic liquid crystalline polyester prepolymer by condensation-polymerization of the monomers. Acetic acid, which is a by-product of the preparation of the wholly aromatic liquid crystalline polyester prepolymer, was also continuously removed during the preparation of the wholly aromatic liquid crystalline polyester prepolymer with the acetic acid produced during the acetylation. Then, the prepolymer was collected from the reactor and cooled and solidified.

Then, the wholly aromatic liquid crystalline polyester prepolymer was finely ground, and 35 kg of the ground wholly aromatic liquid crystalline polyester prepolymer was added to a 100 L rotary kiln reactor. The temperature of the reactor was increased up to 200°C where weight loss of the prepolymer is initiated for 1 hour while flowing nitrogen at a rate of 1 Nm³/hr. Then, the temperature was increased up to 325°C for 10 hours and maintained at 325°C for 1 hour to prepare a wholly aromatic liquid crystalline polyester resin LCP A. Then, the reactor was cooled to room temperature for 1 hour, and the wholly aromatic liquid crystalline polyester resin LCP A was collected from the reactor.

The melting point of the resin LCP A measured using a differential scanning calorimeter (DSC 2910, TA Instruments, Inc.) was 405°C.

### Preparation Example 2: Preparation of Wholly Aromatic Liquid Crystalline Polyester Resin LCP B Having Lower Melting Point

23.40kg (169.4 mol) of p-hydroxybenzoic acid, 10.45 kg (56.1 mol) of biphenol, 8.10 kg (48.8 mol) of terephthalic acid and 1.50 kg (9.0 mol) of isophthalic acid were added to a 100 L batch reactor, the temperature of which is controllable. Nitrogen gas was injected to the reactor to inactivate the inside of the reactor, and then 31.63 kg of acetic anhydride was added thereto. Then, 3.68 g of potassium acetate was further added to the reactor in order to facilitate condensation-polymerization that is described below. Then, the temperature of the reactor was increased up to 150°C for 30 minutes and the alcohol functional group of the monomers was acetylated at the same temperature for 2 hours. Then, the temperature of the reactor was increased up to 315°C at 0.9°C/min while removing acetic acid that is produced during the acetylation to prepare a wholly aromatic liquid crystalline polyester prepolymer by condensation-polymerization of the monomers. Acetic acid, which is a by-product of the preparation of the wholly aromatic liquid crystalline polyester prepolymer, was also continuously removed during the preparation of the wholly aromatic liquid crystalline polyester prepolymer with the acetic acid produced during the acetylation. Then, the wholly aromatic liquid crystalline polyester prepolymer was collected from the reactor and cooled and solidified.

Then, the wholly aromatic liquid crystalline polyester prepolymer was finely ground, and 35 kg of the ground wholly aromatic liquid crystalline polyester prepolymer was added to a 100 L rotary kiln reactor. The temperature of the reactor was increased up to 200°C where weight loss of the prepolymer is initiated for 1 hour while flowing nitrogen at a rate of 1 Nm³/hr. Then, the temperature was increased up to 320°C for 10 hours and maintained at 320°C for 1 hour to prepare a wholly aromatic liquid crystalline polyester resin LCP B. Then, the reactor was cooled to room temperature for 1 hour, and the wholly aromatic liquid crystalline polyester resin LCP B was collected from the reactor.

The melting point of the wholly aromatic liquid crystalline polyester resin LCP B measured using a differential scanning calorimeter (DSC 2910, TA Instruments, Inc.) was 345°C.

### Examples 1 to 3 and Comparative Examples 1 and 2: Preparation of Wholly Aromatic Liquid Crystalline Polyester Resin Compounds

The wholly aromatic liquid crystalline polyester resin LCP A prepared in Preparation Example 1, the wholly aromatic liquid crystalline polyester resin LCP B prepared in Preparation Example 2, and a glass fiber, e.g., a ground glass fiber having a diameter of 10 µm and an average length of 3 mm, were mixed at a weight ratio as shown in Table 1, and the mixture was melt-kneaded using a twin-screw extruder (ZK25, Dr. Collin, GmbH) at a cylinder temperature of 420°C to prepare a wholly aromatic liquid crystalline polyester resin compound. By-products were removed while the resin compound is prepared by applying vacuum to the twin-screw extruder.

### Evaluation Example

### Measurement of Heat Resistance Heat Distortion Temperature)

Injection-molded samples were prepared using the wholly aromatic liquid crystalline polyester resin compounds prepared in Examples 1 to 3 and Comparative Examples 1 and 2, and heat resistance of the samples was evaluated. The results are shown in Table 1 below.

The shape and heat resistance of the samples were formed and measured according to ASTM D648, respectively. The pressure applied thereto was 18.5 kgf/cm².

### Measurement of Outgas Generation

The wholly aromatic liquid crystalline polyester resin compounds prepared in Examples 1 to 3 and Comparative Examples 1 and 2 were ground to a particle size less than 1 mm and the powder was heat-treated at 150°C for 24 hours. Then, acetic acid and phenol gas generated from the resin compounds were quantitatively analyzed by gas chromatography. Particularly, the resin compound powder having a particle size less than 1 mm was quantified and cleaned using distilled water. The cleaned powder was added to a 25 ml vial that was dried in a vacuum, and the vial was sealed using a Teflon packing and heat-treated in a hot-air dryer at 150°C for 24 hours to generate gas from the resin compound powder. Then, the vial was mounted on a headspace (Agilent 7694) gas chromatography (Agilent 6890), and the gas of the vial was injected into a column having a length of 20 m and using DBWAX (Agilent). The amount of the gas was measured by using an FID detector under a measurement condition of an initial temperature of 50°C, a heating rate of 20°C/min, and a final temperature of 280°C.

### Measurement of Melt Viscosity

Melt viscosity of the wholly aromatic liquid crystalline polyester resin LCP A prepared in Preparation Example 1 and the wholly aromatic liquid crystalline polyester resin compounds prepared in Examples 1 to 3 and Comparative Examples 1 and 2 was measured using a melt viscosity measuring device (RH2000, Rosand Inc.) having a 1.0 mmx32 mm capillary at 425°C and at a shear rate of 1000/s. The results are shown in Table 1 below.

### Evaluation of Fluidity

Melt viscosity ratios of the wholly aromatic liquid crystalline polyester resin compounds prepared in Examples 1 to 3 and Comparative Examples 1 and 2 were evaluated, and the results are shown in Table 1 below. As the calculated melt viscosity ratio decreases, fluidity increases.

Melt viscosity ratio = (Melt viscosity of the wholly aromatic liquid crystalline polyester resin compound)/(Melt viscosity of LCP A)

**Table 1**

| | Composition of Wholly Aromatic Liquid Crystalline Polyester Resin Compound (Pars by weight) | | | Heat distortion temperature (°C) | Amount of Outgas (wtppm⁻¹) | Melt viscosity (at 410°C, at a shear rate of 100sec⁻¹) (Pa·sec) | | Melt viscosity ratio (inverse proportion to Fluidity) |
|---|---|---|---|---|---|---|---|---|
| | LCP A | LCP B | Glass fiber | | | Wholly aromatic liquid crystalline polyester resin compound | LCP A | |
| Example 1 | 63 | 7 | 30 | 341 | 5 | 45 | 80 | 0.56 |
| Example 2 | 59.5 | 10.5 | 30 | 337 | 20 | 39 | 80 | 0.49 |
| Example 3 | 56 | 14 | 30 | 332 | 40 | 32 | 80 | 0.40 |
| Comparative Example 1 | 70 | 0 | 30 | 355 | <1 | 80 | 80 | 1 |
| Comparative 2 | 0 | 70 | 30 | 280 | 200 | Impossible to measure | Impossible to measure | Impossible to measure |

| | | | | | | | | |
|---|---|---|---|---|---|---|---|---|
| *1: calculated based on the total weight of the wholly aromatic liquid crystalline polyester resin compound. | | | | | | | | |

Referring to Table 1, the wholly aromatic liquid crystalline polyester resin compounds prepared in Examples 1 to 3 had good heat resistance and fluidity and generate a relatively small amount of outgas (i.e., ≤ 40 wtppm). At least one of the properties of fluidity, outgas generation amount and heat resistance of the wholly aromatic liquid crystalline polyester resin compounds prepared in Comparative Examples 1 and 2 is considerably poor.

As described above, the wholly aromatic liquid crystalline polyester resin compound according to one or more of the above embodiments of the present invention may be efficiently used to manufacture parts for optical pick-up which require high heat resistance.

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. A wholly aromatic liquid crystalline polyester resin compound comprising:
a first wholly aromatic liquid crystalline polyester resin having a higher melting point (Tₘ₁);
a second wholly aromatic liquid crystalline polyester resin having a lower melting point (Tm₂₎; and
an additive,
wherein the higher melting point Tₘ₁ of the first wholly aromatic liquid crystalline polyester resin and the lower melting point Tₘ₂ of the second wholly aromatic liquid crystalline polyester resin satisfy the following condition::
370°C ≤ Tₘ₁ ≤ 440°C,
310°C ≤ Tₘ₂ ≤ 380°C, and
20°C ≤ Tₘ₁-Tₘ₂ ≤ 80°C.

2. The wholly aromatic liquid crystalline polyester resin compound of claim 1, wherein the second wholly aromatic liquid crystalline polyester resin comprises a repeating unit A derived from an aromatic hydroxycarboxylic acid, a repeating unit B derived from an aromatic diol, and a repeating unit C derived from an aromatic dicarboxylic acid:
wherein the repeating units A, B, and C satisfy the following condition:
40 mol% ≤ repeating unit A/total repeating units ≤ 60 mol%,
10 mol% ≤ repeating unit B/total repeating units ≤ 30 mol%,
80 mol% ≤ repeating unit B/repeating unit C ≤ 100 mol%.

3. The wholly aromatic liquid crystalline polyester resin compound of claim 2, wherein the repeating unit A is derived from at least one compound selected from the group consisting of p-hydroxy benzoic acid and 2-hydroxy-6-naphthoic acid, the repeating unit B is derived from at least one compound selected from the group consisting of biphenol and hydroquinone, and the repeating unit C is derived from at least one compound selected from the group consisting of isophthalic acid, naphthalene dicarboxylic acid, and terephthalic acid.

4. The wholly aromatic liquid crystalline polyester resin compound of claim 3, wherein the repeating unit C of the second wholly aromatic liquid crystalline polyester resin satisfies the following condition:
15 mol% ≤ repeating unit C₂ derived from isophthalic acid/(repeating unit C₁ derived from terephthalic acid+repeating unit C₂ derived from isophthalic acid) ≤ 35 mol%.

5. The wholly aromatic liquid crystalline polyester resin compound of claim 1, wherein the amount of the second wholly aromatic liquid crystalline polyester resin is in the range of 5 to 40 parts by weight based on 100 parts by weight of the first wholly aromatic liquid crystalline polyester resin.

6. The wholly aromatic liquid crystalline polyester resin compound of claim 1, wherein the additive comprises at least one additive selected from the group consisting of an inorganic additive comprising glass fiber, talc, calcium carbonate, mica, clay, or any mixture of at least two thereof and an organic additive comprising carbon fiber, and
the amount of the additive is in the range of 10 to 100 parts by weight based on 100 parts by weight of the total amount of the first wholly aromatic liquid crystalline polyester resin and the second wholly aromatic liquid crystalline polyester resin.

7. Parts for optical pick-up comprising a wholly aromatic liquid crystalline polyester resin compound according to any one of claims 1 to 6.

8. A method of preparing a wholly aromatic liquid crystalline polyester resin compound, the method comprising: mixing 100 parts by weight of a first wholly aromatic liquid crystalline polyester resin having a higher melting point Tₘ₁, 5 to 40 parts by weight of a second wholly aromatic liquid crystalline polyester resin having a lower melting point T_{m2,} and 10 to 100 parts by weight of an additive based on 100 parts by weight of the total amount of the first wholly aromatic liquid crystalline polyester resin and the second wholly aromatic liquid crystalline polyester resin, and melt-kneading the mixture,
wherein the higher melting point Tₘ₁ of the first wholly aromatic liquid crystalline polyester resin and the lower melting point Tₘ₂ of the second wholly aromatic liquid crystalline polyester resin satisfy the following condition:
370°C ≤ Tₘ₁ ≤ 440°C,
310°C ≤ Tₘ₂ ≤ 380°C, and
20°C ≤ Tₘ₁-Tₘ₂ ≤ 80°C.
